# EUROPÄISCHE PATENTSCHRIFT

(11) **EP 3 186 293 B1**
(45) Veröffentlichungstag und Bekanntmachung des Hinweises auf die Patenterteilung: **19.09.2018**
(21) Anmeldenummer: 15742307.0
(22) Anmeldetag: 29.07.2015
(51) Int. Cl.: C08G 18/48, C08G 18/50, C08G 18/66, C08G 18/72, C08G 18/75, C08G 18/79, C08G 18/16, C08G 18/20, C08G 18/24, C08G 18/32, C08G 18/36, B60J 10/00, C08G 18/18, C08G 18/34

(54) **ALTERUNGSBESTÄNDIGE POLYURETHANDICHTUNG**
POLYURETHANE SEAL RESISTANT TO AGEING
JOINT D'ÉTANCHÉITÉ EN POLYURÉTHANE RÉSISTANT AU VIEILLISSEMENT

(30) Priorität: 28.08.2014 EP 14182711
(43) Veröffentlichungstag der Anmeldung: 05.07.2017
(73) Patentinhaber: BASF SE, 67056 Ludwigshafen am Rhein (DE)
(72) Erfinder: BOKERN, Stefan, 28209 Bremen (DE); COPPENS, Pierre, 9070A Heusden (O.-VL.) (BE); BOLZE, Patrick, 49076 Osnabrück (DE); MATHIEU, Thomas, 49448 Lemförde (DE); MELLOH, Carola, 49448 Brockum (DE)
(74) Vertreter: BASF IP Association
(86) Internationale Anmeldenummer: PCT/EP2015/067346
(87) Internationale Veröffentlichungsnummer: WO 2016/030111

(56) Entgegenhaltungen:
- EP-A1- 0 676 432
- EP-A1- 2 157 109
- US-A1- 2005 054 764

## Beschreibung

Die vorliegende Erfindung betrifft ein Verfahren zur Herstellung von Dichtungen aus Polyurethan bei dem man (a) aliphatisches Polyisocyanat, (b) Verbindungen mit mindestens zwei gegenüber Isocyanaten reaktiven Gruppen, (c) Katalysatoren, (d) Antioxidantien und/oder Lichtstabilisatoren und gegebenenfalls (e) Treibmittel und (f) Hilfsmittel und/oder Zusatzstoffe zu einer Reaktionsmischung vermischt und die Reaktionsmischung zum Polyurethan ausreagieren lässt, wobei die Dichtung aus Polyurethan eine shore A-Härte von kleiner 90 und eine Dichte von mindestens 850 g/L aufweist und die polymeren Verbindungen mit gegenüber Isocyanat reaktiven Gruppen Verbindungen b1) Polyetherole mit einer Funktionalität von 2 bis 4 und einer Hydroxylzahl von 20 bis 100 mg KOH/g, b2) hydrophobe Polyole mit einer OH-Zahl von kleiner 180 mg KOH/g und einer Funktionalität von größer 2 bis 3 und b3) Kettenverlängerer enthalten. Weiter betrifft die vorliegende Erfindung eine Polyurethandichtung, erhältlich nach einem solchen Verfahren sowie die Verwendung einer solchen Dichtung in Kontakt mit Kautschuk.

Polyurethane zeichnen sich durch vielfältige Einsatzmöglichkeiten aus. Insbesondere im Automobilbau werden diese häufig aufgrund ihrer vielfältigen Eigenschaften eingesetzt. An Polyurethane, die im Automobilbereich, eingesetzt werden, werden hohe Anforderungen gestellt. So werden hervorragende mechanische Eigenschaften verlangt, die sich über die Lebensdauer des Automobils nicht ändern, damit die Polyurethane je nach Einsatzgebiet sowohl ihre Aufgabe im täglichen Gebrauch, beispielsweise die Gebrauchseigenschaften, ästhetische Eigenschaften, haptische Eigenschaften, oder Stabilisierungseigenschaften nicht verlieren. Dabei sind Polyurethane für Automobilanwendungen extremen klimatischen Bedingungen ausgesetzt, wie Sonneneinstrahlung, Feuchte und extremen Temperaturen im Bereich von weniger als - 10 °C bis an 100 °C, die die Alterung des Polyurethans beschleunigen.

Diese extremen Bedingungen führen zu homolytischer Bindungsspaltung, oxidativem Stress oder Hydrolyse. Daraus resultieren unerwünschte Effekte wie eine Verschlechterung der mechanischen Eigenschaften, Versprödung des Materials und Rissbildung. Neben den harschen klimatischen Bedingungen kann auch die Wechselwirkung mit weiteren Materialien, die zusammen mit den Polyurethanen eingesetzt werden, zu unerwünschten Verschlechterungen der Materialeigenschaften führen. Ursache hierfür können Spannungen durch unterschiedliche Wärmeausdehnungskoeffizienten, oder bei Wechselwirkung mit anderen Kunststoffen der negative Effekt einmigrierender Substanzen, wie Weichmacher oder Katalysatorreste sein, die zu einer Versprödung und einer unerwünschten Materialerweichung im Polyurethan führen.

Polyurethane, basierend auf Polyester-Polyolen, zeigen eine deutlich verbesserte Beständigkeit gegen oxidativen Abbau, eignen sich jedoch auf Grund des Abbaus durch Hydrolyse der Estergruppe nicht für Anwendungen in Kontakt mit Nässe oder Feuchtigkeit, wie sie in Automobilen und insbesondere in Außenanwendungen von Automobilen, wie Dichtungsanwendungen, beispielsweise für Scheiben, häufig vorkommt. Dabei ist insbesondere bei Polyurethandichtungen eine hohe Witterungsbeständigkeit erforderlich.

Polyetherpolyole und aromatische Isocyanate wie MDI werden bevorzugt für Automobilaußenanwendungen eingesetzt, zeigen aber auf Grund der UV-Absorption des MDI eine beschleunigte Zerstörung des Materials unter UV-Licht. Anstelle von aromatischem Isocyanat kann zur Verbesserung der Lichtbeständigkeit aliphatisches Isocyanat, wie IPDI, HDI oder H12MDI für Au-βenanwendungen mit hoher UV-Belastung eingesetzt werden. Solche Systeme sind beispielsweise in EP 929586 beschrieben.

Systeme nach EP 929586 zeigen zwar gute Bewitterungsbeständigkeiten, wie Hydrolyse- und UV-Stabilitäten, verspröden aber leicht in Kontakt mit anderen Kunststoffen, insbesondere weichmacherhaltigen Kunststoffen, wie Gummi, beispielsweise Ethylen-Propylen-DienKautschuk (EPDM).

Aufgabe der vorliegenden Erfindung war es Polyurethansysteme zu liefern, die auch in Kontakt mit anderen Polymeren eine hohe Witterungsbeständigkeit aufweisen und sich für den Innen und Außeneinsatz in Fahrzeugen, beispielsweise zur Abdichtung von Scheiben, eignen.

Diese Aufgabe wurde gelöst durch eine Dichtung aus Polyurethan, herstellbar durch ein Verfahren bei dem man (a) aliphatisches Polyisocyanat, (b) Verbindungen mit mindestens zwei gegenüber Isocyanaten reaktiven Gruppen, (c) Katalysatoren, (d) Antioxidantien und/oder Lichtstabilisatoren und gegebenenfalls (e) Treibmittel und (f) Hilfsmittel und/oder Zusatzstoffe zu einer Reaktionsmischung vermischt und die Reaktionsmischung zum Polyurethan ausreagieren lässt, wobei die Dichtung aus Polyurethan eine shore A-Härte von kleiner 90 und eine Dichte von mindestens 850 g/L aufweist und die polymeren Verbindungen mit gegenüber Isocyanat reaktiven Gruppen Verbindungen b1) Polyetherole mit einer Funktionalität von 2 bis 4 und einer Hydroxylzahl von 20 bis 100 mg KOH/g, b2) hydrophobe Polyole mit einer OH-Zahl von kleiner 180 mg KOH/g und einer Funktionalität von größer 2 bis 3 und b3) Kettenverlängerer enthalten.

Insbesondere handelt es sich vorzugsweise um Polyurethane mit einer Dichte von mindestens 850 g/L, vorzugsweise 900 bis 1500 g/L und besonders bevorzugt 950 bis 1350 g/L. Weiter bevorzugt sind massive Polyurethane. Dabei wird ein massives Polyurethan im Wesentlichen ohne Zugabe eines Treibmittels erhalten. Geringe Mengen an Treibmittel, beispielsweise Wasser, das herstellungsbedingt in den Polyolen enthalten ist, gilt dabei nicht als Treibmittel. Vorzugsweise enthält die Reaktionsmischung zur Herstellung des kompakten Polyurethans weniger als 0,2 Gew.-%, besonders bevorzugt weniger als 0,1 Gew.-% und insbesondere weniger als 0,05 Gew.-% Wasser. Weiter weist die erfindungsgemäße Dichtung aus Polyurethan eine Härte von weniger als 90 shore A, vorzugsweise 40 bis 88 shore A und insbesondere 60 bis 86 shore A auf. Diese weichen Polyurethane eignen sich besonders als Dichtungen im Automobilbereich, insbesondere von Glasscheiben, da dies eine gute Anpassung des Materials an die zu dichtenden Flächen erlaubt, ohne dass ein zu hoher Druck erforderlich ist.

Als Isocyanate (a) kommen alle aliphatischen oder cycloaliphatischen Polyisocyanate, bevorzugt Diisocyanate in Betracht. Im Einzelnen seien beispielhaft genannt: aliphatische Diisocyanate, wie Hexamethylendiisocyanat-1,6,2-Methyl-pentamethylendiisocyanat-1,5, cycloaliphatische Diisocyanate, wie Isophorondiisocyanat oder 1,4-Cyclohexandiisocyanat.

Die Isocyanate (a) werden vorzugsweise nicht oder nur teilweise in ihrer monomeren Form eingesetzt und enthalten Isocyanatprepolymere, Uretdione, Isocyanurate, Allophanate oder Biurete. Diese Isocyanate sind bekannt und können kommerziell erworben werden. Vorzugsweise enthalten die Isocyanate Isocyanurate, die durch Trimerisierung von Diisocyanaten erhalten werden, und die drei Isocyanatgruppen aufweisen. Durch den Einsatz von Isocyanuraten ergeben sich damit Vernetzungen im erhaltenen Polyurethan. Insbesondere werden im Rahmen der vorliegendne Erfindung als Polyisocyanate (a) Isocyanurate des Isophorondiisocyanats eingesetzt. In einer besonders bevorzugten Ausführungsform enthalten die Isocyanate a) monomeres und trimeres Isocyanurat des Isophorondiisocyanat. Dabei beträgt der NCO-Gehalt des Isocyanats (a) vorzugsweise 24,4 bis 34, besonders bevorzugt 26 bis 32. Vorzugsweise enthalten die Isocyanate a) neben Isophorondiisocyanat und Isophoronisocyanurat weniger als 30 Gew.-%, besonders bevorzugt weniger als 15 Gew.-% und insbesondere weniger als 5 Gew.-% weitere Isocyanate. Dabei können alle unter (a) genannten Isocyanate als weitere Isocyanate eingesetzt werden, insbesondere werden Prepolymere des lophorondiisocyanats als weitere Isocyanate eingesetzt.

Polyisocyanatprepolymere sind erhältlich, indem vorstehend beschriebene Polyisocyanate (Bestandteil (a-1)) im Überschuss, beispielsweise bei Temperaturen von 30 bis 100 °C, bevorzugt bei etwa 80 °C, mit Verbindungen mit gegenüber Isocyanaten reaktiven Gruppen (b) (Bestandteil (a-2)) zum Isocyanatprepolymer umgesetzt werden.

Polymere Verbindungen mit gegenüber Isocyanaten reaktiven Gruppen (a-2) und Kettenverlängerungsmittel (a3) sind dem Fachmann bekannt und beispielsweise beschrieben im "Kunststoffhandbuch, 7, Polyurethane", Carl Hanser-Verlag, 3. Auflage 1993, Kapitel 3.1. So können beispielsweise als Polymere Verbindungen mit gegenüber Isocyanaten reaktiven Gruppen (a-2) auch die nachfolgend unter (b) beschriebenen Polymere Verbindungen mit gegenüber Isocyanaten reaktiven Gruppen eingesetzt werden.

Als Verbindungen mit gegenüber Isocyanaten reaktiven Gruppen (b) können alle bekannten Verbindungen mit mindestens zwei gegenüber Isocyanaten reaktiven Wasserstoffatomen eingesetzt werden, beispielsweise solche mit einer Funktionalität von 2 bis 8 und einem zahlenmittleren Molekulargewicht von 400 bis 15000 g/mol. So können beispielsweise Verbindungen, ausgewählt aus der Gruppe der Polyetherpolyole, Polyesterpolyole oder Mischungen daraus, verwendet werden.

Polyetherole werden beispielsweise hergestellt aus Epoxiden, wie Propylenoxid und/oder Ethylenoxid, oder aus Tetrahydrofuran mit wasserstoffaktiven Starterverbindungen, wie aliphatischen Alkoholen, Phenolen, Aminen, Carbonsäuren, Wasser oder Verbindungen auf Naturstoffbasis, wie Saccharose, Sorbit oder Mannit, unter Verwendung eines Katalysators. Zu nennen sind hier basische Katalysatoren oder Doppelmetallcyanidkatalysatoren, wie beispielweise in PCT/EP2005/010124, EP 90444 oder WO 05/090440 beschrieben.

Polyesterole werden z.B. hergestellt aus aliphatischen oder aromatischen Dicarbonsäuren und mehrwertigen Alkoholen, Polythioetherpolyolen, Polyesteramiden, hydroxylgruppenhaltigen Polyacetalen und/oder hydroxylgruppenhaltigen aliphatischen Polycarbonaten, vorzugsweise in Gegenwart eines Veresterungskatalysators. Weitere mögliche Polyole sind beispielsweise im "Kunststoffhandbuch, Band 7, Polyurethane", Carl Hanser Verlag, 3. Auflage 1993, Kapitel 3.1 angegeben.

Neben den beschriebenen Polyetherolen und Polyesterolen können auch füllstoffhaltige Polyetherole oder Polyesterole, auch als Polymerpolyetherole oder Polymerpolyesterole bezeichnet, eingesetzt werden. Solche Verbindungen enthalten vorzugsweise dispergierte Partikel aus thermoplastischen Kunststoffen, beispielsweise aufgebaut aus olefinischen Monomeren, wie Acrylnitril, Styrol, (Meth)Acrylaten, (Meth)Acrylsäure und/oder Acrylamid. Solche Füllstoffhaltigen Polyole sind bekannt und kommerziell erhältlich. Ihre Herstellung ist beispielweise beschrieben in DE 111 394, US 3 304 273, US 3 383 351, US 3 523 093, DE 1 152 536, DE 1 152 537 WO 2008/055952 und WO2009/128279.

Weiter umfassen die Verbindungen mit mindestens zwei gegenüber Isocyanat reaktiven Gruppen Kettenverlängerer und Vernetzungsmittel. Als Kettenverlängerer und Vernetzungsmittel können Verbindungen mit mindestens zwei gegenüber Isocyanaten reaktiven Gruppen eingesetzt werden, die ein Molekulargewicht von weniger als 400 g/mol aufweisen, wobei Moleküle mit zwei gegenüber Isocyanat reaktiven Wasserstoffatomen als Kettenverlängerer und Moleküle mit mehr als zwei gegenüber Isocyanat reaktiven Wasserstoffen als Vernetzer bezeichnet werden.

Dabei enthält die Komponente (b) Polyetherole b1) mit einer Funktionalität von 2 bis 4 und einer Hydroxylzahl von 20 bis 100 mg KOH/g, hydrophobe Polyole b2) mit einer OH-Zahl von kleiner 180 mg KOH/g und einer Funktionalität von größer 2 bis 3 und Kettenverlängerer b3).

Als Polyetherole b1) werden vorzugsweise Polyetherole eingesetzt, die durch an sich bekannte Anlagerung von Alkylenoxiden an Verbindungen, die mindestens zwei mit Alkylenoxiden reaktive Wasserstoffatome aufweisen, hergestellt werden können. Beispielsweise erfolgt die Herstellung der Polyetherole b1) durch anionische Polymerisation von Alkylenoxiden mit Alkalihydroxiden als Katalysatoren und unter Zusatz eines Startermoleküls, das mehrere reaktive Wasserstoffatome aufweist. Als Alkylenoxide kann eine oder mehrere Verbindungen, ausgewählt aus Propylenoxid (PO) und Ethylenoxid (EO), Butylenoxid und Tetrahydrofuran, eingesetzt werden.

Als Startermoleküle dienen beispielsweise Wasser, zweiwertige Alkohole, wie Ethylenglykol, Propylenglykol, oder Butandiole, dreiwertige Alkohole, wie Glycerin oder Trimethylolpropan, sowie höherwertige Alkohole, wie Pentaerythrit, Zuckeralkohole, beispielsweise Saccarose, Glucose oder Sorbit, sowie aromatische Diole beispielsweise Bisphenol A, Bisphenol F oder Bisphenol S. Dabei werden die Startermoleküle so ausgewählt, dass die mittlere Funktionalität des erhaltenen Polyetherols b1) 2 bis 4, vorzugsweise 2,2 bis 3,0 und insbesondere 2,5 bis 2,9 beträgt. Vorzugsweise werden als Startermoleküle dreifunktionelle Verbindungen, besonders bevorzugt Trimethylolpropan oder Glycerin und insbesondere Glycerin eingesetzt.

Als Alkylenoxid wird vorzugsweise eine Mischung Ethylenoxid und/oder Propylenoxid eingesetzt. Vorzugsweise werden dabei die Alkylenoxide in solchen Mengenverhältnissen eingesetzt, dass der Anteil an Ethylenoxid kleiner als 30 Gew.-%, besonders bevorzugt 1 bis 20 Gew.-% und insbesondere 5 bis 15 Gew.-%, bezogen auf das Gesamtgewicht des zur Herstellung des Polyetherols b1) eingesetzten Alkylenoxids, beträgt. Insbesondere wird neben Ethylenoxid und Propylenoxid kein weiteres Alkylenoxid eingesetzt. Dabei weist das Polyetherol b1) vorzugsweise einen Gehalt an primären OH-Gruppen von größer 40 %, besonders bevorzugt 70 bis 100 % und insbesondere 75 bis 95 % auf. Dabei kann der Anteil der primären OH-Gruppen durch die Reihenfolge der Zugabe des Alkylenoxids gesteuert werden, wobei Ethylenoxid zu primären OH-Gruppen und Propylenoxid zu sekundären OH-Gruppen im Polyetherol führt. Die Hydroxylzahl des Polyetherols b1) beträgt 20 bis 100 mg KOH/g und vorzugsweise 25 bis 50 mg KOH/g.

Als Polyol b2) wird ein Polyol mit einer OH-Zahl von kleiner 180 mg KOH/g, vorzugsweise 50 bis 160 mg KOH/g und insbesondere 100 bis 155 mg KOH/g und einer Funktionalität von größer 2 bis 3, vorzugsweise 2,05 bis 2,8, besonders bevorzugt 2,05 bis 2,7 und insbesondere 2,1 bis 2,5 eingesetzt. Vorzugsweise ist das Polyol b2) hydrophob, das heißt, es enthält einen Molekülteil mit mindestens 5 aufeinanderfolgenden Kohlenwasserstoffgruppen. Besonders bevorzugt ist das Polyol b2) fettsäurebasiert, das heißt, das Polyol b2) enthält das Umsetzungsprodukt einer Carbonsäure mit 7 bis 50, vorzugsweise 9 bis 30 Kohlenstoffatomen, die verzweigt oder linear, gesättigt oder ungesättigt und substituiert oder unsubstituiert sein kann, mit mehrwertigen Alkoholen, vorzugsweise mit Glycerin. Dabei können die OH-Gruppen des mehrwertigen Alkohols ganz oder teilweise durch Reaktion mit der Fettsäure verestert sein.

Vorzugsweise werden als Polyol b2) Ricinusöl oder besonders bevorzugt Umsetzungsprodukte natürlicher Öle eingesetzt, wobei die Hydroxylzahl und die Funktionalität beispielsweise durch Hydratisierung von Doppelbindungen, Alkoxylierung von OH-Gruppen und /oder Dehydratisierung eingestellt wird. Eine Alkoxylierung erfolgt dabei nach dem bei Polyol b1) beschriebenen Verfahren.

Besonders bevorzugt wird als Polyol b2) partiell dehydratisiertes Ricinusöl eingesetzt. Die Abspaltung von Wasser erfolgt dabei üblicherweise in Gegenwart von sauren Katalysatoren wie Schwefelsäure, Phosphorsäure, Säureanhydriden und/oder sauer reagierenden Metalloxiden und führt zu einer zweiten Doppelbindung, die zum großen Anteil konjugiert zwischen C₁₁ und C₁₂ entsteht. Die Estergruppen zum Glycerin bleiben dabei erhalten. Je nach Reaktionsbedingungen und Dauer werden verschiedene Qualitäten erzeugt, die sich hauptsächlich in der Viskosität durch während des Verfahrens bereits einsetzende Polymerisation unterscheiden. Partiell dehydratisiertes Ricinusöl ist beispielsweise kommerziell erhältlich unter dem Namen Sovermol® 1005 von der BASF SE und ist als Polyol b2) besonders bevorzugt.

Als Kettenverlängerer b3) werden Verbindungen eingesetzt, die 2 aliphatisch gebundene OH-Gruppen und ein Molekulargewicht von weniger als 160, vorzugsweise 62 bis 140 und insbesondere 62 bis 100 g/mol aufweisen. Vorzugsweise beträgt dabei der Anteil der primären OH-Gruppen mindestens 50%. Beispiele für Kettenverlängerer b2 sind Monoethylenglycol, 1,3 Propylenglycol, 1,2 Propylenglycol und 1,4 Butandiol. Besonders bevorzugt wird als Kettenverlängerer b3) Monoethylenglycol eingesetzt.

Neben den Verbindungen b1) bis b3) können die Verbindungen mit gegenüber Isocyanaten reaktiven Gruppen (b) des Weiteren Verbindungen (b4) mit einem Molekulargewicht von kleiner 150 g/mol, einer mittleren Funktionalität von 2 bis 3 und als gegenüber Isocyanat funktionelle Gruppen funktionelle Gruppen, ausgewählt aus -NH₂, -NH- und -OH Gruppen eingesetzt werden, wobei mindestens eine der funktionellen Gruppen eine -NH₂-Gruppe oder eine -NH-Gruppe ist. Vorzugsweise wird als Verbindung b4) Diethanolamin eingesetzt.

Weiter können die Verbindungen mit gegenüber Isocyanaten reaktiven Gruppen (b) neben den Verbindungen (b1) bis (b3) und gegebenenfalls (b4) Verbindungen (b5) mit einem Molekulargewicht von 800 bis 6000 g/mol, vorzugsweise 1500 bis 2500 g/mol, einer Funktionalität von 2 bis 4, vorzugsweise 2-3 und besonders bevorzugt 2 wobei als gegenüber Isocyanat funktionelle Gruppen funktionelle Gruppen, ausgewählt aus -NH₂, -NH- und -OH Gruppen eingesetzt werden und mindestens eine der funktionellen Gruppen eine NH₂-Gruppe ist. Vorzugsweise sind beide der funktionellen Gruppen NH2-Gruppen. Besonders bevorzugt wird als Komponente b5) aminiertes Alkylenoxid, ausgehend von difunktionellen Startermolekülen eingesetzt, wobei das Alkylenoxid insbesondere Propylenoxid ist.

Weiter ist bevorzugt wenn die Verbindung mit mindestens zwei gegenüber Isocyanaten reaktiven Gruppen (b) neben den Verbindungen (b1) bis (b3) und gegebenenfalls (b4) und (b5) auch Verbindungen (b6) mit einem Molekulargewicht von kleiner 400 besonders bevorzugt 92 bis 300 g/mol und insbesondere 92 bis 200 g/mol und einer Hydroxyfunktionalität von 3 bis 6, vorzugsweise mit 3 bis 4 OH-Gruppen und insbesondere mit 3 OH-Gruppen enthalten. Beispiele für Verbindungen (b6) sind Glycerin, Trimethylolpropan oder alkokxyliertes Glycerin oder alkoxyliertes Trimethylolpropan, wobei als Alkylenoxid vorzugsweise Ethylenoxid eingesetzt wird. Insbesondere bevorzugt als Komponente (b6) ist Glycerin.

Dabei beträgt der Anteil der Komponente b1) vorzugsweise 50 bis 90 Gew.-%, besonders bevorzugt 55 bis 80 Gew.-%, der Anteil der Komponente b2) 5 bis 25 Gew.-%, bevorzugt 8 bis 19 Gew.-%, besonders bevorzugt 8 bis 15 Gew.-%, der Anteil der Komponente b3) 1 bis 7 Gew.-%, bevorzugt 3 bis 6 Gew.-%, der Anteil der Komponente b4) 0 bis 5 Gew.-%, bevorzugt 1 bis 5 Gew.-% und der Anteil der Komponente b5) 0 bis 15 Gew.-%, bevorzugt 3 bis 10 Gew.-% und (b6) 0 bis 5, vorzugsweise 0 bis 4 und insbesondere 0 Gew.-%, jeweils bezogen auf das Gesamtgewicht der Komponenten b1) bis b6). Neben den Komponenten b1) bis b6) werden vorzugsweise weniger als 20 Gew.-%, mehr bevorzugt weniger als 10 Gew.-%, besonders bevorzugt weniger als 1 Gew.-% und insbesondere keine weiteren Verbindungen mit gegenüber Isocyanat reaktiven Gruppen eingesetzt.

Im Rahmen der vorliegenden Erfindung bezieht sich die Funktionalität auf die reale Funktionalität, die aufgrund von Nebenreaktionen niedriger sein kann, als die theoretische Funktionalität, die sich aus der Funktionalität des Startermoleküls ergibt. Bestimmungsmethoden für die reale Funktionalität sind bekannt, so können beispielsweise durch Wasserabspaltung entstandene Doppelbindungen bestimmt werden, beispielsweise durch Jod-Titration.

Katalysatoren c) beschleunigen die Reaktion der Polyole (b) und gegebenenfalls Kettenverlängerungs- und Vernetzungsmittel (f) sowie chemischem Treibmittel (e) mit den organischen, gegebenenfalls modifizierten Polyisocyanaten (a) stark. Dabei können übliche Katalysatoren zur Herstellung der Polyurethane eingesetzt werden. Genannt seien beispielsweise Amidine, wie 2,3-Dimethyl-3,4,5,6-tetrahydropyrimidin, tertiäre Amine, wie Triethylamin, Tributylamin, DBU, phenolgeblocktes DBU, Dimethylbenzylamin, N-Methyl-, N-Ethyl-, N-Cyclohexylmorpholin, N,N,N',N'-Tetramethylethylendiamin, N,N,N',N'-Tetramethyl-butandiamin, N,N,N',N'-Tetramethyl-hexandiamin, Pentamethyl-diethylentriamin, Tetramethyl-diaminoethylether, Bis-(dimethylaminopropyl)-harnstoff, Dimethylpiperazin, 1,2-Dimethylimidazol, 1-Aza-bicyclo-(3,3,0)-octan und vorzugsweise 1,4-Diaza-bicyclo-(2,2,2)-octan und Alkanolaminverbindungen, wie Triethanolamin, Triisopropanolamin, N-Methyl- und N-Ethyl-diethanolamin und Dimethylethanolamin. Ebenso kommen in Betracht organische Metallverbindungen, vorzugsweise organische Zinnverbindungen, wie Zinn-(II)-salze von organischen Carbonsäuren, z.B. Zinn-(II)-acetat, Zinn-(II)-octoat, Zinn-(II)-ethylhexoat und Zinn-(II)-laurat und die Dialkylzinn-(IV)-salze von organischen Carbonsäuren, z.B. Dibutyl-zinndiacetat, Dibutylzinndilaurat, Dibutylzinnmaleat und Dioctylzinn-diacetat, sowie Bismutcarboxylate, wie Bismut(III)-neodecanoat, Bismut-2-ethylhexanoat und Bismut-octanoat oder Mischungen davon. Die organischen Metallverbindungen können allein oder vorzugsweise in Kombination mit stark basischen Aminen eingesetzt werden.

Weiter können bekannte, einbaubare Aminkatalysatoren verwendet werden. Diese weisen mindestens eine, vorzugsweise 1 bis 8 und besonders bevorzugt 1 bis 2 gegenüber Isocyanaten reaktive Gruppen, wie primäre Amingruppen, sekundäre Amingruppen, Hydroxylgruppen, Amide oder Harnstoffgruppen, auf. Einbaubare Aminkatalysatoren werden meist zur Herstellung emissionsarmer Polyurethane eingesetzt, die insbesondere im Automobilinnenbereich eingesetzt werden. Solche Katalysatoren sind bekannt und beispielsweise in EP1888664 beschrieben. Sollen die Emissionen weiter verringert werden, werden ausschließlich einbaubare Katalysatoren als Katalysatoren (c) eingesetzt oder Mischungen aus einbaubaren und nicht einbaubaren Katalysatoren.

Werden Katalysatoren (c) eingesetzt, können diese beispielsweise in einer Konzentration von 0,001 bis 5 Gew.-%, insbesondere 0,05 bis 2 Gew.-% als Katalysator bzw. Katalysatorkombination, bezogen auf das Gewicht der Komponente (b) eingesetzt werden.

Als Antioxidantien und/oder Lichtstabilisatoren (d) können alle für Polyurethan bekannten Antioxidationsmittel und Lichtstabilisatoren eingesetzt werden. Diese umfassen gehinderte Amin-Lichtstabilisatoren, sogenannte HALS (Hindered Amin Light Stabilizer), die als Struktureinheit eine oder mehrere 2,2,6,6-tetramethyl piperidine-Einheiten aufweisen. Solche Verbindungen können beispielsweise unter den Handelsnamen Uvinul® 5050 H, Uvinul® 4077 H, Tinuvin® 770, UV-77, JPT, Sabostab® UV 70, Sanol® LS-770, Adekastab® LA-77, HS-770, Uvinul® 4050 H Uvinul® 4077 H, Tinuvin® 622, Sabostab® UV 62, Uvinul® 5062 H, Chisorb® 622; Tinuvin® 144, Tinuvin® 765, Tinuvin® 292, Tinuvin® 123, Tinuvin® 5100, Chimassorb® 119, Chimassorb® 944, Adekastab® LA-94, Sanol® LS 944, Tinuvin® 783, Tinuvin® XT 833, Mark LA52 FI, oder Adekastab® LA-52 erworben werden. Neben gehinderten Aminen können Verbindungen mit einer oder mehrerer der allgemeinen Struktureinheiten, ausgewählt aus der Gruppe, bestehend aus Benzophenon, Benztriazol, Cyanoacrylat, Cinamat, Oxanilid, Formamidin, Triazin, Benzyliden-Malonat als Lichtstabilisatoren, insbesondere gegen UV-Strahlung eingesetzt werden. Beispiele für diese Verbindungen sind unter den Handelsnamen Uvinul® 3008, Chimassorb® 81, CH81 DRIED, Kemisorb® 12, Seesorb® 102, Adekastab® 1413, Adekastab® LA-51, Viosorb® 130, Uvinul® 3026, Tinuvin® 326, Tinogard® AS, Kemisorb® 73, Seesorb® 703, Adekastab® LA-36, Viosorb® 550, Sumisorb® 300, UV-730, Tomisorb® 600, Uvinul® 3027, Tinuvin® 327, Kemisorb® 72, Seesorb® 702, Adekastab® LA-34, Viosorb® 580, UV-750, Tomisorb® 700, Uvinul® 3028, BLS 1328, Cyasorb® UV-2337, Tinuvin® 328, Kemisorb® 74, Seesorb® 704, Viosorb® 591, Sumisorb® 350, Uvinul® 3029, Tinuvin® 329, UV5411, Kemisorb® 79, Seesorb® 709, Viosorb® 583, Sumisorb® 340, Uvinul® 3033 P, BLS 1710, Kingsorb® 71, Tinuvin® P, Kemisorb® 71, Seesorb® 701, Adekastab® LA-32, Viosorb® 520, Sumisorb® 200, UV-710, Tomisorb® 100, Uvinul® 3030, Uvinul® 3035, Uvinul® 3039, Uvinul® N 539 T, Uvinul® 3088, Tinosorb® OMC, Uvinul® MC 80 N, Tinuvin® 213, Eversorb® 80, Tinuvin® 234, Uvinul® 3034, Tinuvin® 900, Eversorb® 234, Seesorb® 706, Viosorb® 590, Sumisorb® 590, Tinuvin® 312, Sanduvor® VSU Powder, Tinuvin® 571, Tinuvin® 171, Tinogard® TL, Additive NX Tinubin®571, Chisorb® 971, Tinuvin® 101, Zikasorb® R, Additive TS 3111, Cyasorb® 1164, Uvinul® 3000, Sanduvor® PR25, Hostavin® PR25, NEPA, Tinuvin® 384, Tinuvin® 99, Eversorb® 81, CGL 384 Distilled, Tinuvin® 1577, Tinuvin® 360, Tinosorb® MBBT, Lowilite® 36, Tinuvin® 320, Kemisorb® 75, Seesorb® 705, Adekastab® LA-38, Viosorb® 582 und Sumisorb® 320, erhältlich.

Als Antioxidantien werden insbesondere Verbindungen eingesetzt, die eine oder mehrere der Struktureinheiten, ausgewählt aus sterisch gehinderten Phenolen, Sulfiden oder Benzoaten enthalten. Dabei sind bei sterisch gehinderten Phenolen die beiden Orthowasserstoffe durch Verbindungen substituiert, die nicht Wasserstoff sind und vorzugsweise mindestens 1 bis 20 besonders bevorzugt 3 bis 15 Kohlenstoffatome tragen und vorzugsweise verzweigt sind. Auch Benzoate tragen vorzugsweise in Orthoposition zur OH-Gruppe Substituenten, die nicht Wasserstoff sind und besonders bevorzugt 1 bis 20, insbesondere 3 bis 15 Kohlenstoffatome tragen, die vorzugsweise verzweigt sind. Beispiele für diese Verbindungen sind unter den Handelsnamen Irganox® 245 FF, Irganox® 245, Songnox® 2450 FF, Irganox® 1010, Anox® 20, Betenox® 1010, Ashland® AO 610, BNX 1010, Dovernox® 10, Irganox® L 101, Songnox® 1010, Spül-IX 1010, Tinogard® TT, VX IX 1010 ED, VXDD IX 1010 ED, Adekastab® AO-60, Sumilizer® BP-101, Tominox® TT, Irganox® 1098, Plaox®-1098, Lowinox® HD98, Chinox® 1098, Tinuvin® 144, Irganox® 1135, CA 505, Irganox® L135, Irgastab® BD 50, KPA 2399, Lubad® 668, Naugalube® 531, Naugard® PS-48, OIC 135, OX BF, Stock 3074, Irganox® 1076, BNX 1076, Anox® PP 18, Naugard® 76, Tinogard® TS, Adekastab® AO-50, Sumilizer® BP-76, Tominox® SS, Irganox® 1425, Irgamod® 195, Antioxidant 1425, Irganox® 3114, Irganox® 1330 Ethanox® 330, Kingnox® 1330, Adekastab® AO-330, Irganox® 1081, Irganox® E201, Tocopherylquinone, DL-alpha-Tocopherol, Irganox® PS 800, Arenox® DL, Dilaurylthiodipropionat (DLTDP), Irganox® PS 802, Arenox® DS, Cyanox® STDP-SP Powder, DSTP, Kingnox® DSTDP, Irganox® 565, Tinogard® MD1, Irganox® 1035, Irganox® L115, Irganox® 1520, Irgastab® cable KV 10, Irganox® 1726, Irganox® 3052, Irganox® MD 1024, Lowinox® MD24, Thanox® MD 1024, Irgastab® MBS 11, Irgastab® PVC 11, Irgastab® PVC 11 EM, Irgastab® PUR 55, Irgastab® PUR 67, Irgastab® PUR 68, Irganox® B 1171, Irganox® B 215, Irganox® B 225, Irganox® B 220, Irganox® B 561, Irganox® B 612, Tinuvin® XT 833, Yoshinox® SR, Irganox® 415, Lowinox® TBM, Sangonox® TBMC, Tinuvin® 120, Kemisorb® 112, Seesorb® 712, Adekastab® LA-12, Viosorb® 80, Sumisorb® 400, Adekastab® AO-40, Sumilizer® BBM-S und Lowinox® 44B25 erhältlich.

Besonders bevorzugt enthalten die erfindungsgemäß eingesetzten Antioxidantien und/oder Lichtstabilisatoren (d) mindestens eine Ester- oder Ethergruppe, wobei jeweils in Nachbarschaft zu den Sauerstoffatomen der Ester- oder Ethergruppe im Molekül des Antioxidants oder des Lichtstabilisators ein Kohlenstoffatom steht. Beispiele hierfür sind Uvinul® 4077 H, Tinuvin®770, UV-77, JPT, Sabostab® UV 70, Sanol® LS-770, Adekastab® LA-77, HS-770, Uvinul® 3008, Chimassorb® 81, CH81 DRIED, Kemisorb® 12, Seesorb® 102, Adekastab® 1413, Adekastab® LA-51, Viosorb® 130, Uvinul® 3030, Uvinul® 3035, Uvinul® 3039, Uvinul® N 539 T, Uvinul® 3088, Tinosorb® OMC, Uvinul® MC 80 N, Irganox® 245 FF, Irganox® 245, Songnox® 2450 FF, Tinuvin®622, Sabostab® UV 62, Uvinul® 5062 H, Chisorb® 622, Tinuvin®213, Eversorb® 80, Tinuvin®312, Cyasorb® 1164, Sanduvor® PR25, Hostavin® PR25, NEPA, Irganox® 1010, Anox® 20, Betenox® 1010, Ashland® AO 610, BNX 1010, Dovernox® 10, Irganox® L 101, Songnox® 1010, Spül-IX 1010, Stock 4413, Tinogard® TT, VX IX 1010 ED, VXDD IX 1010 ED, Adekastab® AO-60, Sumilizer® BP-101, Tominox® TT, Tinuvin®144, Tinuvin®765, Tinuvin® 292, Irganox® 1135, CA 505, Irganox® L135, Irgastab® BD 50, KPA 2399, Lubad® 668, Naugalube® 531, Naugard® PS-48, OIC 135, OX BF, Stock 3074, Tinuvin®384, Tinuvin®99, Eversorb® 81, Irganox® 1076, BNX 1076, Anox® PP 18, Naugard® 76, Tinogard® TS, Adekastab® AO-50, Sumilizer BP-76, Tominox® SS, Tinuvin®1577, Tinuvin®123, Tinuvin®5100, Irganox® PS 800, Arenox® DL, Dilaurylthiodipropionat (DLTDP), Irganox® PS 802, Arenox® DS, Cyanox® STDP-SP Powder, DSTP, Kingnox® DSTDP, Irganox® 1035, Irganox® L115, Irganox® 3052, Irgastab® PUR 67, Irgastab® PUR 68, Mark LA52 FI, Adekastab® LA-52, Tinuvin®120, Kemisorb® 112, Seesorb® 712, Adekastab® LA-12, Viosorb® 80 und Sumisorb® 400.

Der Anteil der Verbindung (d), bezogen auf das Gesamtgewicht der Komponenten (a) bis (f) beträgt vorzugsweise mehr als 0,1 Gew.-%, besonders bevorzugt von 0,3 bis 10 Gew.-% und insbesondere von 0,5 bis 5 Gew.-%.

Wenn das erfindungsgemäße Polyurethan als Polyurethan-Schaumstoff vorliegen soll, enthalten erfindungsgemäße Reaktionsmischungen noch Treibmittel (e). Dabei können alle zur Herstellung von Polyurethanen bekannten Treibmittel eingesetzt werden. Diese können chemische und/oder physikalische Treibmittel enthalten. Solche Treibmittel werden beispielsweise im "Kunststoffhandbuch, Band 7, Polyurethane", Carl Hanser Verlag, 3. Auflage 1993, Kapitel 3.4.5 beschrieben. Unter chemischen Treibmitteln werden dabei Verbindungen verstanden, die durch Reaktion mit Isocyanat gasförmige Produkte bilden. Beispiele für solche Treibmittel sind Wasser oder Carbonsäuren. Unter physikalischen Treibmitteln werden dabei Verbindungen verstanden, die in den Einsatzstoffen der Polyurethan-Herstellung gelöst oder emulgiert sind und unter den Bedingungen der Polyurethanbildung verdampfen. Dabei handelt es sich beispielsweise um Kohlenwasserstoffe, halogenierte Kohlenwasserstoffe und andere Verbindungen, wie zum Beispiel perfluorierte Alkane, wie Perfluorhexan, Fluorchlorkohlenwasserstoffe, und Ether, Ester, Ketone, Acetale und/oder flüssiges Kohlendioxid. Dabei kann das Treibmittel in jeder beliebigen Menge eingesetzt werden. Vorzugsweise wird das Treibmittel in einer Menge eingesetzt, dass der resultierende Polyurethanschaumstoff eine Dichte von 10 bis 850 g/L, besonders bevorzugt 20 bis 800 g/L und insbesondere 25 bis 500 g/L aufweist. Besonders bevorzugt werden Treibmittel, enthaltend Wasser eingesetzt. Vorzugsweise werden keine Treibmittel (e) eingesetzt.

Weiter können Hilfsmittel und/oder Zusatzstoffe (h) eingesetzt werden. Dabei können alle zur Herstellung von Polyurethanen bekannten Hilfs- und Zusatzstoffe verwendet werden. Genannt seien beispielsweise oberflächenaktive Substanzen, Wasserfänger, Schaumstabilisatoren, Zellregler, Trennmittel, Füllstoffe, Farbstoffe, Pigmente, Flammschutzmittel, Hydrolyseschutzmittel, fungistatische und bakteriostatisch wirkende Substanzen. Solche Substanzen sind bekannt und beispielsweise in "Kunststoffhandbuch, Band 7, Polyurethane", Carl Hanser Verlag, 3. Auflage 1993, Kapitel 3.4.4 und 3.4.6 bis 3.4.11 beschrieben.

Im Allgemeinen werden bei der Herstellung der erfindungsgemäßen Polyurethan-Dichtung die Einsatzstoffe in solchen Mengen zur Umsetzung gebracht, dass das Verhältnis von NCO-Gruppen der Polyisocyanate (a) zur Summe der reaktiven Wasserstoffatome der Komponenten (b) bis (d) und gegebenenfalls (e) und (f) 0,9 bis 1,2:1, vorzugsweise 0,95 bis 1,15:1 beträgt. Ein Verhältnis von 1:1 entspricht dabei einem Isocyanatindex von 100.

Vorzugsweise wird die erfindungsgemäße Polyurethan-Dichtung durch Einbringen der Reaktionsmischung in eine Form, die vorzugsweise den zu dichtenden Gegenstand enthält, besonders bevorzugt durch Aufsprühen auf den zu dichtenden Gegenstand in einer offenen Form erhalten. Das Sprühverfahren in einer offenen Form ist dabei in EP 1577080 beschrieben. Vorzugsweise handelt es sich bei der erfindungsgemäßen Polyurethandichtung um eine Dichtung für transparente Gegenstände, beispielsweise Scheiben, wie Glasscheiben oder transparente Kunststoffscheiben, beispielsweise Plexiglas, vorzugsweise Glasscheiben, insbesondere für Windschutzscheiben im Automobilbau und wird vorzugsweise im Sprühverfahren nach EP 1577080 hergestellt. Dabei wird im Rahmen der Erfindung die Mischung der Komponenten (a) bis (e) bei Reaktionsumsätzen kleiner 90 %, bezogen auf die Isocyanatgruppen, als Reaktionsmischung bezeichnet.

Insbesondere bei Einsatz im Automobilbau kommt es vor, dass die erfindungsgemäße Polyurethandichtung in Kontakt mit Bestandteilen und Abbauprodukten anderer Polymere in Kontakt kommt. Dabei kann dies durch direkten Kontakt der erfindungsgemäßen Polyurethandichtung mit dem weiteren Polymeren als auch durch Übertragung der Polymerbestandteile, beispielsweise durch die Luft, erfolgen. Vorzugsweise steht die erfindungsgemäße PolyurethanDichtung in direktem Kontakt mit dem weiteren Polymeren.

Problematisch sind dabei insbesondere Polymere, die einen hohen Anteil an emittierbaren Stoffen aufweisen, wie Kautschuke, insbesondere synthetische Kautschuke und die daraus durch Vulkanisation erhältlichen Gummis. Dabei werden unter Kautschuk unverletzte, aber durch Vulkanisation vernetzbare Polymere mit kautschukelastischen Eigenschaften bei 20 °C verstanden. Bei höheren Temperaturen und/oder unter Einfluss deformierender Kräfte zeigen Kautschuke viskoses Fließen. Die Vernetzbarkeit der Kautschuke setzt das Vorhandensein funktioneller Gruppen, insbesondere ungesättigter Kohlenstoff-Kohlenstoff-Bindungen, voraus, über die in einem als Vulkanisation Kautschuk-Moleküle intermolekular miteinander verknüpft werden. Beispiele für Kautschuke sind Styrol-Butadien-Kautschuke, (SBR), Ethylen-Propylen-Terpolymer-Kautschuke (EPTR), Nitrilkautschuke (NBR) und Polychloroprene (CR). In einer besonders bevorzugten Ausführungsform ist das weitere Polymer Ethylen-Propylen-Dien Terpolymer bzw. der daraus durch Vulkanisation erhältliche Gummi. Dabei werden vorzugsweise als Dienkomponente unkonjugierte Diene eingesetzt, von denen lediglich eine Doppelbindung an der Polymerkettenbildung beteiligt ist, so dass weitere Doppelbindungen außerhalb des direkten Kettengerüsts verbleiben. Diese kann mit Schwefel vulkanisiert werden. Besonders bevorzugt beträgt der Gehalt der Dienkomponente 2 bis 12 Gew.-%, bezogen auf das Gesamtgewicht der Ethylen, Propylen und Dienkomponente.

Die vorliegende Erfindung wird im Folgenden anhand von Beispielen verdeutlicht.

### Ausgangsmaterialien:

| | |
|---|---|
| Polyol 1: | Polyetherol auf Basis von Ethylenoxid und Propylenoxid mit Glycerin als Starter, einer OH-Zahl von 35 mg KOH/g, einem Ethylenoxidgehalt von 13 Gew.% und einem Propylenoxidgehalt von 85 Gew.% bezogen auf das Gesamtgewicht und einer Funktionalität von 2,7. |
| Polyol 2: | Polyol auf Basis von dehydratisiertem Ricinusöl mit einer OH-Zahl von 124 mg KOH/g und einer Funktionalität von 2,2. |
| Polyol 3: | Ricinusöl. |
| Polyol 4: | Polyesterol auf Basis von Adipinsäure und Monoethylenglycol sowie Diethylenglycol mit einem MEG-Gehalt von 31 Gew.% und einem Diethylenglycol-Gehalt von 21 Gew.% bezogen auf das Gesamtgewicht. Das Polyesterol weist eine OH-Zahl von 56 mg KOH/g und eine Funktionalität von 2,0 auf. |
| Fettsäureester: | Aliphatischer Fettsäureester auf Basis von Glycerin mit einer Funktionalität von 0,0. |
| Polyetheramin: | Lineares Polypropylenglycol mit endständigen Amino-Funktionen, einer Aminzahl von 56,7 mg KOH/g und einer Funktionalität von 2,0. |
| Vernetzer: | Polyetherol auf Basis von Ethylenoxid mit 1,1,1-Trimethylolpropan als Starter, einer OH-Zahl von 935 mg KOH/g, einem Ethylenoxidgehalt von 23 Gew.% bezogen auf das Gesamtgewicht und einer Funktionalität von 3,0. |
| MEG: | Monoethylenglycol |
| DEA: | Diethanolamin |
| Katalysator 1: | Aminkatalysator auf Basis einer annellierten Amidinstruktur. |
| Katalysator 2: | Mischung aus 35 Gew.% Phenol, 55 Gew.% Katalysator 1 und 10 Gew.% Diethylenglycol. |
| Katalysator 3: | Dimethylzinndineodecanoat |
| Stabilisator 1: | Ethylenbis(oxyethylen)bis[3-(5-tert-butyl-4-hydroxy-m-tolyl)propionat] (Irganox® 245) |
| Stabilisator 2: | 2-(2H-benzotriazol-2-yl)-4,6-ditertpentylphenol (Tinuvin® 328): |
| Schwarzpaste: | Dispersion von 50 Gew.% Ruß in Polyol 1. |
| Isocyanat: | Mischung aus monomerem Isophorondiisocyanat und trimerem Isocyanuraten auf Basis von Isophorondiisocyanat mit einem NCO-Gehalt der Mischung von 29,1%. |
| TNPP: | Trisnonylphenylphosphit |
| Stabilisator 3: | Bis(1,2,2,6,6-pentamethyl-4-piperidyl)sebacat |

Durch Vermischen der in Tabelle 1 aufgeführten Komponenten wurde eine Mischung 1 erzeugt.

**Tabelle 1: Zusammensetzung Mischung 1 in Gewichtsprozent**

| | Vergleich 1 | Beispiel 1 | Beispiel 2 | Vergleich 2 | Beispiel 3 | Vergleich 3 |
|---|---|---|---|---|---|---|
| Polyol 1 | 74,84 | 64,84 | 64,84 | 64,84 | 66,59 | 68,04 |
| Polyol 2 | 0,00 | 10,00 | 0,00 | 0,00 | 10,00 | 0,00 |
| Polyol 3 | 0,00 | 0,00 | 10,00 | 0,00 | 0,00 | 0,00 |
| Polyol 4 | 0,00 | 0,00 | 0,00 | 10,00 | 0,00 | 0,00 |
| Fettsäureester | 0,00 | 0,00 | 0,00 | 0,00 | 0,00 | 9,09 |
| Polyetheramin | 6,00 | 6,00 | 6,00 | 6,00 | 6,00 | 5,46 |
| Vernetzer | 2,50 | 2,50 | 2,50 | 2,50 | 1,25 | 2,27 |
| MEG | 5,70 | 5,70 | 5,70 | 5,70 | 5,20 | 5,18 |
| DEA | 3,30 | 3,30 | 3,30 | 3,30 | 3,30 | 3,00 |
| Katalysator 1 | 0,48 | 0,48 | 0,48 | 0,48 | 0,48 | 0,44 |
| Katalysator 2 | 0,48 | 0,48 | 0,48 | 0,48 | 0,48 | 0,44 |
| Stabilisator 1 | 0,95 | 0,95 | 0,95 | 0,95 | 0,95 | 0,86 |
| Stabilisator 2 | 0,95 | 0,95 | 0,95 | 0,95 | 0,95 | 0,86 |
| Schwarzpaste | 4,80 | 4,80 | 4,80 | 4,80 | 4,80 | 4,36 |

Durch Vermischen der in Tabelle 2 aufgeführten Komponenten wurde eine Mischung 2 erzeugt.

**Tabelle 2: Zusammensetzung Mischung 2 in Gewichtsprozent**

| | Vergleich 1 | Beispiel 1 | Beispiel 2 | Vergleich 2 | Beispiel 3 | Vergleich 3 |
|---|---|---|---|---|---|---|
| Isocyanat | 88,20 | 88,20 | 88,20 | 88,20 | 88,20 | 88,20 |
| Katalysator 3 | 1,50 | 1,50 | 1,50 | 1,50 | 1,50 | 1,50 |
| TNPP | 8,60 | 8,60 | 8,60 | 8,60 | 8,60 | 8,60 |
| Stabilisator 3 | 1,70 | 1,70 | 1,70 | 1,70 | 1,70 | 1,70 |

### Handversuche:

Die Mischung 1 wurde mit Mischung 2 bei einem Isocyanat-Index von 100 miteinander vermischt und in eine geschlossene Form gegeben, sodass Formteile erhalten wurden.

### Maschinenversuche:

In einem Standard-Hochdruck-RIM-Verfahren wird ein kompakter Prüfkörper durch Vermischen der Mischungen 1 und 2 mit einem Isocyanatindex von 100 mit möglichst glatter Oberfläche und einer Dicke von 4 mm und einer Breite von 4 cm hergestellt. Ein solches Verfahren ist beispielsweise beschrieben im "Kunststoffhandbuch, 7, Polyurethane", Carl Hanser-Verlag, 3. Auflage 1993, Kapitel 4.2.

Auf diesem Probenkörper wird durch mechanisches Verklammern ein Probenkörper aus EPDM mit 2 mm Dicke mittig befestigt und dabei auf komplett spaltfreien Kontakt zwischen EPDM und Polyurethan geachtet. Die Breite des EPDM-Streifens beträgt 1 cm, so dass links und rechts eine freie Polyurethan-Oberfläche von jeweils 1,5 cm bleibt.

Beim verwendeten EPDM (Ethylen Propylen Dien)-Monomer-Elastomer handelt es sich um ein kompaktes, tiefschwarzes, in der Automobilindustrie verwendetes weichmacherhaltiges Dichtungsmaterial mit einem Gehalt an Naphtha-basierten Weichmachern von 30-40 Gew.%. Der Testkörper wird 2500h nach ASTM G155, Zyklus 7 künstlich gealtert, dabei wird die Probenkörperseite mit dem mechanisch befestigten EPDM-Streifen in Richtung Licht/Bewitterungsquelle orientiert. Eine durch Weichmachermigration und UV-Bewitterung verursachte eventuelle Rissbildung wird links und rechts neben dem EPDM auf der Polyurethanoberfläche beobachtet.

Für die Bestimmungen der Shore-Härten nach DIN 53505 wurden ebenfalls Platten aus dem Standard-Hochdruck-RIM-Verfahren aus den Maschinenversuchen vor der Bewitterung verwendet.

### Ergebnisse:

| Eigenschaft | Vergleich 1 | Beispiel 1 | Beispiel 2 | Vergleich 2 | Beispiel 3 | Vergleich 3 |
|---|---|---|---|---|---|---|
| Shore-A-Härte nach DIN 53505 | 85 | 88 | 88 | 86 | 77 | 76 |
| Rissbildung | ja | nein | n. b. | ja | nein | ja |

## Patentansprüche

1. Verfahren zur Herstellung von Dichtungen aus Polyurethan bei dem man
(a) aliphatisches Polyisocyanat,
(b) Verbindungen mit mindestens zwei gegenüber Isocyanaten reaktiven Gruppen,
(c) Katalysatoren,
(d) Antioxidantien und/oder Lichtstabilisatoren und gegebenenfalls
(e) Treibmittel und
(f) Hilfsmittel und/oder Zusatzstoffe
zu einer Reaktionsmischung vermischt und die Reaktionsmischung zum Polyurethan ausreagieren lässt,
wobei die Dichtung aus Polyurethan eine shore A-Härte von kleiner 90 und eine Dichte von mindestens 850 g/L aufweist und die polymeren Verbindungen mit gegenüber Isocyanat reaktiven Gruppen Verbindungen b1) Polyetherole mit einer Funktionalität von 2 bis 4 und einer Hydroxylzahl von 20 bis 100 mg KOH/g b2) hydrophobe Polyole mit einer OH-Zahl von kleiner 180 mg KOH/g und einer Funktionalität von größer 2 bis 3 und b3) Kettenverlängerer enthalten.

2. Verfahren nach Anspruch 1, **dadurch gekennzeichnet, dass** das aliphatische Polyisocyanat (a) eine Mischung aus monomerem und trimerem Isophorondiisocyanat enthält

3. Verfahren nach Anspruch 1 oder 2, **dadurch gekennzeichnet, dass** die Hydroxylzahl des Polyetherols b1) 25 bis 50 mg KOH/g beträgt.

4. Verfahren nach einem der Ansprüche 1 bis 3, **dadurch gekennzeichnet, dass** das Polyetherol b1) als Alkylenoxid Ethylenoxideinheiten und Propylenoxideinheiten aufweist, wobei der Anteil an Ethylenoxideinheiten, bezogen auf das Gesamtgewicht an Alkylenoxideinheiten im Polyetherpolyol b1) kleiner als 30 Gew.-% ist und der Anteil an primären OH-Gruppen größer als 70 %, bezogen auf die Anzahl der OH-Gruppen im Polyetherpolyol b1) ist.

5. Verfahren nach einem der Ansprüche 1 bis 4, **dadurch gekennzeichnet, dass** das hydrophobe Polyol b2) Glyceride von Fettsäuren oder modifizierten Fettsäuren enthalten.

6. Verfahren nach einem der Ansprüche 1 bis 5, **dadurch gekennzeichnet, dass** das hydrophobe Polyol b2) Ricinusöl, dehydratisiertes Ricinusöl oder Alkoxylierungsprodukte von Ricinusöl oder dehydratisiertem Ricinusöl enthält.

7. Verfahren nach einem der Ansprüche 1 bis 6, **dadurch gekennzeichnet, dass** der Kettenverlängerer b3) 2 aliphatisch gebundene OH-Gruppen und ein Molekulargewicht von weniger als 160 g/mol aufweist.

8. Verfahren nach einem der Ansprüche 1 bis 7, **dadurch gekennzeichnet, dass** die Verbindungen mit mindestens zwei gegenüber Isocyanaten reaktiven Gruppen (b) neben den Verbindungen (b1) bis (b3) des Weiteren eine Verbindung (b4) mit einem Molekulargewicht von kleiner 150 g/mol, einer mittleren Funktionalität von 2 bis 3 und als gegenüber Isocyanat funktionelle Gruppen, funktionelle Gruppen, ausgewählt aus -NH₂, -NH- und -OH Gruppen, eingesetzt wird, wobei mindestens eine der funktionellen Gruppen eine -NH₂-Gruppe oder eine -NH-Gruppe ist.

9. Verfahren nach einem der Ansprüche 1 bis 8, **dadurch gekennzeichnet, dass** die Verbindungen mit mindestens zwei gegenüber Isocyanaten reaktiven Gruppen (b) neben den Verbindungen (b1) bis (b3) und gegebenenfalls (b4) des Weiteren ein Verbindung (b5) mit einem Molekulargewicht von 800 bis 6000 g/mol, einer Funktionalität von 2 bis 4 und als gegenüber Isocyanat funktionelle Gruppen funktionelle Gruppen, ausgewählt aus -NH₂, - NH- und -OH Gruppen, eingesetzt wird, wobei mindestens eine der funktionellen Gruppen eine NH₂-Gruppe ist.

10. Verfahren nach einem der Ansprüche 1 bis 9, **dadurch gekennzeichnet, dass** die Verbindungen mit mindestens zwei gegenüber Isocyanaten reaktiven Gruppen (b) neben den Verbindungen (b1) bis (b3) und gegebenenfalls (b4) und (b5) des Weiteren ein Verbindung (b6) mit einem Molekulargewicht von kleiner 400 g/mol und einer Hydroxyfunktionalität von 3 bis 6 aufweist.

11. Verfahren nach einem der Ansprüche 1 bis 10, **dadurch gekennzeichnet, dass** als Katalysatoren ausschließlich Aminkatalysatoren eingesetzt werden.

12. Verfahren nach einem der Ansprüche 1 bis 11, **dadurch gekennzeichnet, dass**, bezogen auf das Gesamtgewicht der Komponenten b1) bis b6) der Anteil der Komponente b1) 50 bis 90 Gew.-%, der Anteil der Komponente b2) 5 bis 25 Gew.-%, der Anteil der Komponente b3) 1 bis 7 Gew.-%, der Anteil der Komponente b4) 0 bis 5 Gew.-%, der Anteil der Komponente b5) 0 bis 15 Gew.-% und der Anteil der Komponente b6) 0 bis 5 Gew.-% beträgt.

13. Verfahren nach einem der Ansprüche 1 bis 12, **dadurch gekennzeichnet, dass** die Komponenten a) bis f) in einem solchen Verhältnis miteinander vermischt werden, dass der Isocyanatindex 90 bis 120 beträgt.

14. Dichtungen aus Polyurethan, erhältlich nach einem Verfahren gemäß einem der Ansprüche 1 bis 13.

15. Verwendung einer Dichtung aus Polyurethan nach Anspruch 14 in Kontakt mit Kautschuk.

16. Verwendung einer Dichtung aus Polyurethan nach Anspruch 15 als Dichtung für Scheiben.

## Claims

1. A process for the production of polyurethane gaskets by mixing
(a) aliphatic polyisocyanate,
(b) compounds having at least two groups reactive toward isocyanates,
(c) catalysts,
(d) antioxidants and/or light stabilizers, and optionally
(e) blowing agents, and
(f) auxiliaries and/or additional substances
to give a reaction mixture, and allowing completion of the reaction mixture to give the polyurethane,
where the Shore A hardness of the polyurethane gasket is smaller than 90 and its density is at least 850 g/L, and the polymeric compounds having groups reactive toward isocyanate comprise b1) polyetherols with functionality from 2 to 4 and with hydroxy number from 20 to 100 mg KOH/g, b2) hydrophobic polyols with OH number smaller than 180 mg KOH/g and with functionality from greater than 2 to 3, and b3) chain extenders.

2. The process according to claim 1, wherein the aliphatic polyisocyanate (a) comprises a mixture of monomeric and trimeric isophorone diisocyanate.

3. The process according to claim 1 or 2, wherein the hydroxy number of the polyetherol b1) is from 25 to 50 mg KOH/g.

4. The process according to any of claims 1 to 3, wherein the polyetherol b1) has, as alkylene oxide, ethylene oxide units and propylene oxide units, where the proportion of ethylene oxide units, based on the total weight of alkylene oxide units in the polyether polyol b1), is smaller than 30% by weight, and the proportion of primary OH groups is greater than 70%, based on the number of OH groups in the polyether polyol b1).

5. The process according to any of claims 1 to 4, wherein the hydrophobic polyol b2) comprises castor oil, dehydrated castor oil, or alkoxylation products of castor oil or of dehydrated castor oil.

6. The process according to any of claims 1 to 5, wherein the hydrophobic polyol b2) comprises castor oil, dehydrated castor oil or alkoxylation products of castor oil or dehydrated castor oil.

7. The process according to any of claims 1 to 6, wherein the chain extender b3) has aliphatically bonded OH groups, and its molar mass is less than 160 g/mol.

8. The process according to any of claims 1 to 7, wherein the compounds (b) having at least two groups reactive toward isocyanates moreover is used, alongside the compounds b1) to b3), a compound b4) with molar mass smaller than 150 g/mol and with average functionality from 2 to 3 and, as groups having functionality toward isocyanate, functional groups selected from -NH₂, -NH-, and -OH groups, where at least one of the functional groups is an -NH₂ group or an -NH- group.

9. The process according to any of claims 1 to 8, wherein the compounds (b) having at least two groups reactive toward isocyanates moreover is used, alongside the compounds b1) to b3) and optionally b4), a compound b5) with molar mass from 800 to 6000 g/mol and with average functionality from 2 to 4 and, as groups having functionality toward isocyanate, functional groups selected from -NH₂, -NH-, and -OH groups, where at least one of the functional groups is an NH₂ group.

10. The process according to any of claims 1 to 9, wherein the compounds (b) having at least two groups reactive toward isocyanates moreover comprises, alongside the compounds b1) to b3), and optionally b4) and b5), a compound b6) with molar mass smaller than 400 g/mol and with hydroxy functionality from 3 to 6.

11. The process according to any of claims 1 to 10, wherein catalysts used are exclusively amine catalysts.

12. The process according to any of claims 1 to 11, wherein, based on the total weight of components b1) to b6), the proportion of component b1) is from 50 to 90% by weight, the proportion of component b2) is from 5 to 25% by weight, the proportion of component b3) is from 1 to 7% by weight, the proportion of component b4) is from 0 to 5% by weight, the proportion of component b5) is from 0 to 15% by weight, and the proportion of component b6) is from 0 to 5% by weight.

13. The process according to any of claims 1 to 12, wherein the ratio in which components (a) to (f) are mixed is such that the isocyanate index is from 90 to 120.

14. A polyurethane gasket obtainable by a process according to any of claims 1 to 13.

15. The use of a polyurethane gasket according to claim 14 in contact with rubber.

16. The use of a polyurethane gasket according to claim 15 as gasket for glazing.

## Revendications

1. Procédé de fabrication de joints en polyuréthane, selon lequel
(a) un polyisocyanate aliphatique,
(b) des composés contenant au moins deux groupes réactifs avec les isocyanates,
(c) des catalyseurs,
(d) des antioxydants et/ou des photostabilisateurs et éventuellement
(e) des agents gonflants et
(f) des adjuvants et/ou des additifs,
sont mélangés en un mélange réactionnel, et le mélange réactionnel est laissé réagir pour former le polyuréthane,
le joint en polyuréthane présentant une dureté Shore A de moins de 90 et une densité d'au moins 850 g/l, et les composés polymères contenant des groupes réactifs avec les isocyanates contenant b1) des polyéthérols ayant une fonctionnalité de 2 à 4 et un indice hydroxyle de 20 à 100 mg KOH/g, b2) des polyols hydrophobes ayant un indice OH inférieur à 180 mg KOH/g et une fonctionnalité de plus de 2 à 3, et b3) des allongeurs de chaînes.

2. Procédé selon la revendication 1, **caractérisé en ce que** le polyisocyanate aliphatique (a) contient un mélange de diisocyanate d'isophorone monomère et trimère.

3. Procédé selon la revendication 1 ou 2, **caractérisé en ce que** l'indice hydroxyle du polyéthérol b1) est de 25 à 50 mg KOH/g.

4. Procédé selon l'une quelconque des revendications 1 à 3, **caractérisé en ce que** le polyéthérol b1) comprend en tant qu'oxyde d'alkylène des unités oxyde d'éthylène et des unités oxyde de propylène, la proportion d'unités oxyde d'éthylène par rapport au poids total des unités oxyde d'alkylène dans le polyéther-polyol b1) étant inférieure à 30 % en poids et la proportion de groupes OH primaires étant supérieure à 70 %, par rapport au nombre de groupes OH dans le polyéther-polyol b1).

5. Procédé selon l'une quelconque des revendications 1 à 4, **caractérisé en ce que** le polyol hydrophobe b2) contient des glycérides d'acides gras ou d'acides gras modifiés.

6. Procédé selon l'une quelconque des revendications 1 à 5, **caractérisé en ce que** le polyol hydrophobe b2) contient de l'huile de ricin, de l'huile de ricin déshydratée ou des produits d'alcoxylation d'huile de ricin ou d'huile de ricin déshydratée.

7. Procédé selon l'une quelconque des revendications 1 à 6, **caractérisé en ce que** l'allongeur de chaînes b3) comprend 2 groupes OH reliés aliphatiquement et présente un poids moléculaire de moins de 160 g/mol.

8. Procédé selon l'une quelconque des revendications 1 à 7, **caractérisé en ce que** les composés contenant au moins deux groupes réactifs avec les isocyanates (b) en plus des composés (b1) à (b3) est utilisé en outre un composé (b4) ayant un poids moléculaire inférieur à 150 g/mol, une fonctionnalité moyenne de 2 à 3 et comprenant en tant que groupes fonctionnels vis-à-vis des isocyanates des groupes fonctionnels choisis parmi les groupes -NH₂, -NH- et -OH, au moins un des groupes fonctionnels étant un groupe -NH₂ ou un groupe -NH-.

9. Procédé selon l'une quelconque des revendications 1 à 8, **caractérisé en ce que** les composés contenant au moins deux groupes réactifs avec les isocyanates (b) en plus des composés (b1) à (b3) et éventuellement (b4) est utilisé en outre un composé (b5) ayant un poids moléculaire de 800 à 6 000 g/mol, une fonctionnalité de 2 à 4 et comprenant en tant que groupes fonctionnels vis-à-vis des isocyanates des groupes fonctionnels choisis parmi les groupes -NH₂, -NH- et -OH, au moins un des groupes fonctionnels étant un groupe -NH₂.

10. Procédé selon l'une quelconque des revendications 1 à 9, **caractérisé en ce que** les composés contenant au moins deux groupes réactifs avec les isocyanates (b) contient en plus des composés (b1) à (b3) et éventuellement (b4) et (b5) en outre un composé (b6) ayant un poids moléculaire inférieur à 400 g/mol et une fonctionnalité hydroxy de 3 à 6.

11. Procédé selon l'une quelconque des revendications 1 à 10, **caractérisé en ce que** des catalyseurs aminés sont utilisés exclusivement en tant que catalyseurs.

12. Procédé selon l'une quelconque des revendications 1 à 11, **caractérisé en ce que**, par rapport au poids total des composants b1) à b6), la proportion du composant b1) est de 50 à 90 % en poids, la proportion du composant b2) est de 5 à 25 % en poids, la proportion du composant b3) est de 1 à 7 % en poids, la proportion du composant b4) est de 0 à 5 % en poids, la proportion du composant b5) est de 0 à 15 % en poids et la proportion du composant b6) est de 0 à 5 % en poids.

13. Procédé selon l'une quelconque des revendications 1 à 12, **caractérisé en ce que** les composants a) à f) sont mélangés les uns avec les autres en un rapport tel que l'indice d'isocyanate soit de 90 à 120.

14. Joints en polyuréthane, pouvant être obtenus par un procédé selon l'une quelconque des revendications 1 à 13.

15. Utilisation d'un joint en polyuréthane selon la revendication 14 en contact avec un caoutchouc.

16. Utilisation d'un joint en polyuréthane selon la revendication 15 en tant que joint pour plaques.
